# EUROPEAN PATENT APPLICATION

(11) **EP 4 489 186 A1**
(43) Date of publication of application: **08.01.2025**
(21) Application number: 22934099.7
(22) Date of filing: 30.03.2022
(51) Int. Cl.: H01M 50/109, H01M 50/167

(54) **BATTERY AND ELECTRONIC DEVICE**

(71) Applicant: Ningde Amperex Technology Limited, Ningde, Fujian 352100 (CN)
(72) Inventor: YAN, Dongyang, Ningde, Fujian 352100 (CN); ZENG, Qiao, Ningde, Fujian 352100 (CN); GAO, Huimin, Ningde, Fujian 352100 (CN)
(74) Representative: Klunker IP Patentanwälte PartG mbB
(86) International application number: PCT/CN2022/084131
(87) International publication number: WO 2023/184247

(57) **Abstract**

A battery includes an electrode assembly, a first housing, and a second housing. The first housing (100) includes a first bottom wall (110) and a first peripheral wall (120). The second housing (200) includes a second bottom wall (210) and a second peripheral wall (220). The first peripheral wall (120) is arranged outside the second peripheral wall (220) in a sleeving manner. Here, the second peripheral wall (220) includes a first annular segment (2211) and a second annular segment (2212), the second annular segment (2212) is located on one side of the first annular segment (2211) back away from the second bottom wall (210), the first annular segment (2211) is spaced apart from the first peripheral wall (120) with a spacing of T1, the second annular segment (2212) is spaced apart from the first peripheral wall (120) with a spacing of T2, and 30% <_ T2/T1 ≤ 95%.

## Description

### TECHNICAL FIELD

Embodiments of this application relate to the technical field of batteries, and in particular, to a battery and an electronic apparatus.

### BACKGROUND

A battery is an apparatus that converts energy from the outside world into electrical energy and stores the electrical energy inside in order to supply power to external electrical device (e.g. portable electronic device, etc.) at the moment of need. Currently, the battery is widely used in drones, cell phones, tablets, laptops, and other electrical devices. In wireless Bluetooth headsets, or in some wearable devices, a snap-on battery is often applied, two housings of the snap-on battery are snapped together and an electrode assembly is accommodated in the two housings. The housings of the existing battery are poor in sealing effect, resulting in a short service life of the battery.

### SUMMARY

In order to solve the main technical problem, embodiments of this application provide a battery and an electronic apparatus that can prolong the service life of the battery.

To solve the above technical problem, one technical solution according to this application is to provide a battery, the battery including an electrode assembly, a first housing, and a second housing. The first housing includes a first bottom wall and a first peripheral wall, and the first bottom wall is connected to and covers an end of the first peripheral wall. The second housing includes a second bottom wall and a second peripheral wall, the second bottom wall is connected to and covers one end of the second peripheral wall, and the first peripheral wall is arranged outside the second peripheral wall so that the first housing and the second housing together define an accommodation cavity for accommodating the electrode assembly. The second peripheral wall includes a first annular segment and a second annular segment, and the second annular segment is located on a side of the first annular segment back away from the second bottom wall. The first annular segment is spaced apart from the first peripheral wall at a spacing of T1, the second annular segment is spaced apart from the first peripheral wall at a spacing of T2, and 30% < T2/T1 ≤ 95%. In the above solution, through the coordination of the spacing T1 and the spacing T2, when an adhesive member is provided between the first peripheral wall and the second peripheral wall, the adhesive member forms different compression ratios between the first annular segment and the first peripheral wall and between the second annular segment and the first peripheral wall, and the compression ratios correspond to the dimensional requirement of 30% <_ T2/T1 ≤ 95%, so that the sealing effect between the first peripheral wall and the second peripheral wall is better, the problem that the adhesive member loses the sealing effect due to the aging of the adhesive member or the vibration of the battery can be relieved, and thus the service life of the battery is prolonged.

In some embodiments, the second peripheral wall includes a spacing segment spaced apart from the first peripheral wall, the spacing segment includes a first annular segment and a second annular segment, and a portion of the spacing segment that is closest to the first peripheral wall is located in the second annular segment, and a portion of the spacing segment that is farthest from the first peripheral wall is located in the first annular segment. In the above solution, the compression ratios of the parts of the adhesive member located between the spacing segment and the first peripheral wall can better meet the demand, so that the sealing effect between the first peripheral wall and the second peripheral wall is better, and the problem that the adhesive member loses the sealing effect due to the aging of the adhesive member or the vibration of the battery can be relieved.

In some embodiments, the spacing segment further includes a third annular segment, one end of the third annular segment is connected to the first annular segment, and the other end of the third annular segment is connected to the second annular segment. Along a direction from the second bottom wall to the first bottom wall, a spacing of the third annular segment from the first peripheral wall gradually decreases. In the above solution, the thickness dimension of the adhesive member at the position of the third annular segment gradually decreases along the first direction, and the dimensional change of the adhesive member is smoother and does not produce a sudden change, which can enhance the adhesive degree of the adhesive member with the first peripheral wall and the second peripheral wall, and further enhance the sealing effect of the adhesive member.

In some embodiments, the first annular segment is located at an end portion of the spacing segment close to the second bottom wall, and the second annular segment is located at an end portion of the spacing segment back away from the second bottom wall. In the above solution, it is possible to make the first annular segment and the second annular segment more distantly spaced along the first direction, so that the change in the thickness dimension of the adhesive member along the first direction is smoother, which can enhance the adhesive degree of the adhesive member with the first peripheral wall and the second peripheral wall, and further enhance the sealing effect of the adhesive member.

In some embodiments, along the direction from the second bottom wall to the first bottom wall, a height dimension L1 of the first annular segment, a height dimension L2 of the second annular segment, and a height dimension L3 of the spacing segment satisfy: 10% <_ L1/L3 ≤ 50%, and/or 10% <_ L2/L3 ≤ 50%. In the above solution, it is advantageous for the adhesive member to adhere well to the first peripheral wall and the first annular segment.

In some embodiments, along the direction from the second bottom wall to the first bottom wall, a spacing L4 from the first bottom wall to the second bottom wall and the height dimension L3 of the spacing segment satisfy: 50% <_ L3/L4 ≤ 80%. In the above solution, it is possible to make the connection between the first peripheral wall and the second peripheral wall more stable, and it is also possible to enhance the arrangement space of the electrode assembly and enhance the energy density of the battery.

In some embodiments, the battery further includes an adhesive member, the adhesive member at least partially fills a gap between the first peripheral wall and the second peripheral wall, and the adhesive member is disposed around the outer periphery of the second peripheral wall. The adhesive member includes a first portion and a second portion that are connected to each other, the first portion at least partially fills a gap between the first annular segment and the first peripheral wall, and the second portion at least partially fills a gap between the second annular segment and the first peripheral wall. In the above solution, the portion of the adhesive member filling between the first annular segment and the first peripheral wall is connected to the portion of the adhesive member filling between the second annular segment and the first peripheral wall. Compared with a solution in which two portions exist independently, this solution can improve the processing efficiency on the one hand, and improve the sealing effect on the other hand.

In some embodiments, a compression ratio of the second portion ranges from 40% to 120%. The above solution is more conductive to the sealing of the adhesive member.

In some embodiments, the adhesive member further includes a third portion, the third portion is connected to an end of the second portion back away from the first portion, and along the direction from the second bottom wall to the first bottom wall, the third portion extends beyond an end portion of the second peripheral wall back away from the second bottom wall. In the above solution, a gap between the part of the second peripheral wall back away from the end portion of the second bottom wall and the first peripheral wall is well covered with the adhesive member, which improves the sealing effect of the battery and reduces the generation of leakage.

In some embodiments, the third portion is folded to adhere to an inner annular wall surface of the second peripheral wall. In the above solution, the adhesive member can be connected more tightly with the second peripheral wall, which can effectively reduce the risk of the adhesive member falling off the second peripheral wall.

In some embodiments, along the direction from the second bottom wall to the first bottom wall, a height dimension H1 of the third portion and the spacing L4 between the first bottom wall and the second bottom wall satisfy 5% <_ H1/L4 ≤ 30%. In the above solution, it is possible to make the bonding effect of the adhesive member better while reducing the space occupied by the adhesive member.

In some embodiments, the adhesive member further includes a fourth portion, the fourth portion is connected to an end portion of the first portion back away from the second portion, and along a direction from the first bottom wall to the second bottom wall, the fourth portion extends beyond an end portion of the first peripheral wall back away from the first bottom wall. In the above solution, the fourth portion can well cover the space between the end portion of the first peripheral wall back away from the first bottom wall and the second peripheral wall, which effectively reduces the risk of battery leakage.

In some embodiments, along the direction from the second bottom wall to the first bottom wall, the fourth portion has a dimension of not less than 0.1 mm. In the above solution, it is possible to provide the fourth portion with a more satisfactory sealing effect.

In some embodiments, the first peripheral wall includes a fourth annular segment and a fifth annular segment, one end of the fourth annular segment is connected to the first bottom wall, and the other end of the fourth annular segment is connected to the fifth annular segment. Along the direction from the first bottom wall to the second bottom wall, a spacing of the fifth annular segment from the second peripheral wall gradually decreases. In the above solution, the port area of the end portion of the first peripheral wall back away from the first bottom wall is made smaller, reducing the gap between the first peripheral wall and the second peripheral wall, and at the same time compressing the adhesive member, and further enhancing the sealing effect of the adhesive member.

In some embodiments, the material of the adhesive member is at least one of polytetrafluoroethylene and a modified substance thereof, propylene glycol methyl ether acetate and a modified substance thereof, a copolymer of a small amount of a Trifluoro(heptafluoro-1-propoxy)ethylene with polytetrafluoroethylene and a modified substance thereof, polypropylene and a modified substance thereof, polyethylene and a modified substance thereof, and a propylene-ethylene copolymer. In the above solution, the adhesive member can be made to have high elasticity and a better sealing effect.

A second aspect of this application further provides an electronic apparatus including the battery according to any one of the above.

This application provides the battery in which the first housing and the second housing together define the accommodation cavity for accommodating the electrode assembly. The first peripheral wall of the first housing is arranged outside the second peripheral wall of the second housing in a sleeving manner, and the first annular segment of the second peripheral wall is located on a side of the second annular segment back away from the second bottom wall, where the spacing T1 between the first annular segment and the first peripheral wall and the spacing T2 between the second annular segment and the first peripheral wall satisfy 30% <_ T2/T1 ≤ 95%. In the above solution, through the coordination of the spacing T1 and the spacing T2, when the adhesive member is provided between the first peripheral wall and the second peripheral wall, the adhesive member forms different compression ratios between the first annular segment and the first peripheral wall and between the second annular segment and the first peripheral wall, and the compression ratios correspond to the dimensional requirement of 30% <_ T2/T1 ≤ 95%, so that the sealing effect between the first peripheral wall and the second peripheral wall is better, the problem that the adhesive member loses the sealing effect due to the aging of the adhesive member or the vibration of the battery can be relieved, and thus the service life of the battery is prolonged.

### BRIEF DESCRIPTION OF DRAWINGS

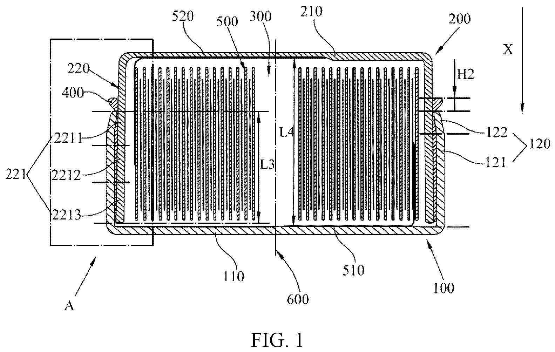

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
a first full-section schematic diagram of a battery according to a first embodiment of this application, where FIG. 1 schematically shows segmented boundary lines of a first annular segment, a second annular segment, and a third annular segment of a second peripheral wall;
FIG. 2 is a partially enlarged schematic diagram of a part A in FIG. 1;
FIG. 3 is a full-section exploded schematic diagram of a battery according to a first embodiment of this application;
FIG. 4 is a full-section schematic diagram of a battery according to a second embodiment of this application, where FIG. 4 schematically shows segmented boundary lines of a first annular segment, a second annular segment, and a third annular segment of a second peripheral wall, and segmented boundary lines of a fourth annular segment and a fifth annular segment of a first peripheral wall;
FIG. 5 is a partially enlarged schematic diagram of a part B in FIG. 4;
FIG. 6 is a three-dimensional full-section schematic diagram of a battery according to a third embodiment of this application, where an electrode assembly is abstracted; and
FIG. 7 is a schematic diagram of a battery according to a fourth embodiment of this application viewed along a first direction X, where a second bottom wall is dissected.

### DETAILED DESCRIPTION OF EMBODIMENTS

For ease of understanding this application, this application is described in more detail below in conjunction with accompanying drawings and specific embodiments. It is hereby noted that when one component is expressed as being "fixed to" another component, it may be directly fixed to the another component, or there may also be one or more components disposed therebetween. When one component is expressed as being "connected" to another component, it may be directly connected to the another component, or there may also be one or more components disposed therebetween. The terms "vertical", "horizontal", "left", "right" and similar expressions used in the description are merely for the purpose of description.

Unless otherwise defined, all technical and scientific terms used in the description shall have the same meanings as commonly understood by a person skilled in the technical field to which this application belongs. The terms used in the description of this application are merely intended to describe the specific embodiments rather than to limit this application. The term "and/or" used in the description includes any and all combinations of one or more of the relevant listed items.

A battery includes a shell and an electrode assembly located within the shell. In an existing type of battery, the shell of the battery includes a first housing and a second housing. The first housing includes a first peripheral wall, and the second housing includes a second peripheral wall. The first peripheral wall is arranged outside the second peripheral wall in a sleeving manner, and the first peripheral wall and the second peripheral wall are provided with an adhesive member therebetween. The adhesive member is arranged around the second peripheral wall, and the inner annular wall surface of the adhesive member is adhered to an outer annular wall surface of the second peripheral wall, and the outer annular wall surface of the adhesive member is adhered to the inner annular wall surface of the first peripheral wall. The adhesive member is used to bond the first peripheral wall to the second peripheral wall on the one hand, and to fill a gap between the first peripheral wall and the second peripheral wall on the other hand.

This applicant has found that the sealing effect of the existing adhesive member is poor, on the one hand, after the battery is used for a period of time, the adhesive member will cause a gap between the first peripheral wall and the second peripheral wall due to aging and thus battery leakage occurs. On the other hand, when the battery is shaken, the adhesive member is likely to detach from the first peripheral wall or the second peripheral wall, resulting in a gap between the first peripheral wall and the second peripheral wall, and thus battery leakage occurs. In summary, the existing battery having the above structure have the problem of a short service life.

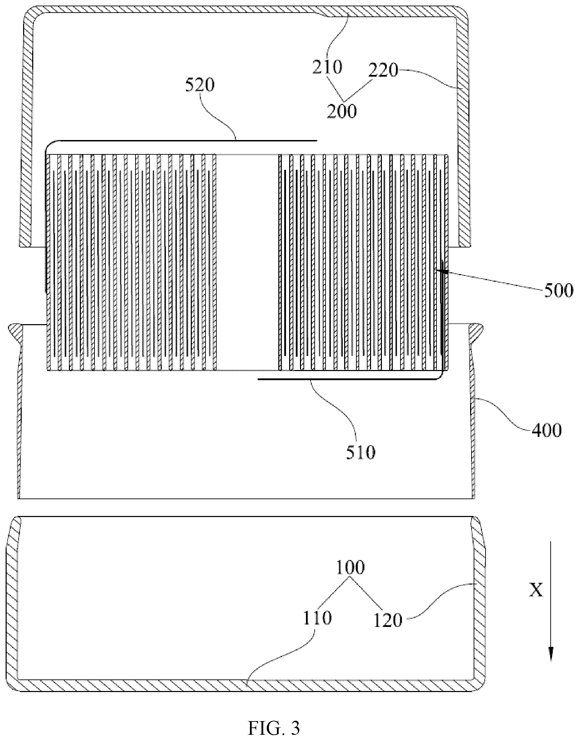

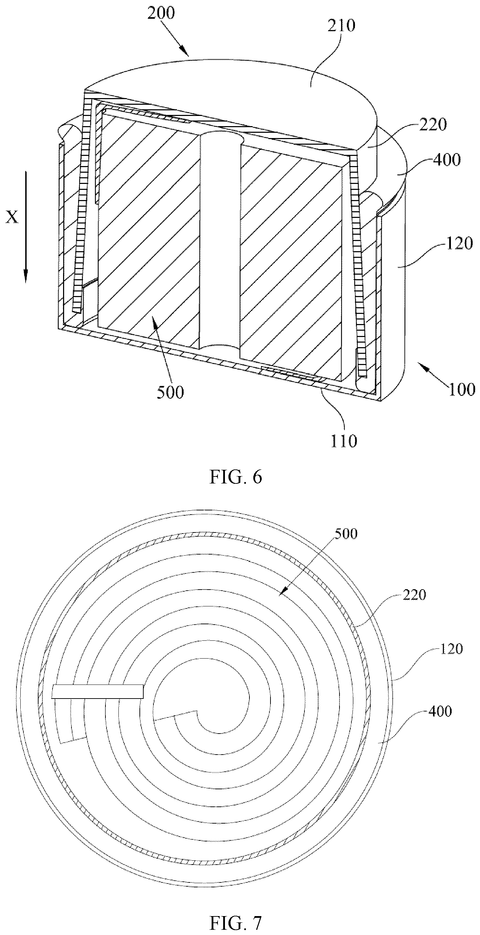

In view of this, referring to FIGS. 1 to 7, this application provides a battery 10, specifically, the battery 10 includes an electrode assembly 500, a first housing 100, a second housing 200, and an adhesive member 400.

The first housing 100 includes a first bottom wall 110 and a first peripheral wall 120. The first peripheral wall 120 is annular in shape, specifically, the first peripheral wall 120 plate may be circular annular in shape, elliptical annular in shape, rectangular annular in shape, or other polygonal annular in shape. The first peripheral wall 120 plate has two end portions opposite each other, and the first bottom wall 110 is connected to and covers one end of the first peripheral wall 120. For ease of description, the following embodiments are exemplified with the first peripheral wall 120 being circular annular in shape. When the first peripheral wall 120 is circular annular in shape, the first bottom wall 110 is circular in shape.

The second housing 200 includes a second bottom wall 210 and a second peripheral wall 220. The second peripheral wall 220 is annular in shape, and similarly, the second peripheral wall 220 plate may be circular annular in shape, elliptical annular in shape, rectangular annular in shape or other polygonal annular in shape. The second peripheral wall 220 plate has two end portions opposite each other, and the second bottom wall 210 is connected to and covers one end of the second peripheral wall 220. For ease of description, the following embodiments are exemplified with the second peripheral wall 220 being circular annular in shape. When the second peripheral wall 220 is circular annular in shape, the second bottom wall 210 is circular annular in shape.

In this embodiment, referring to FIGS. 1 to 3, the first peripheral wall 120 is arranged outside the second peripheral wall 220 in a sleeving manner so that the second housing 200 and the first housing 100 together define an accommodation cavity 300 for accommodating the electrode assembly 500. When installed, the end portion of the second peripheral wall 220 back away from the second bottom wall 210 extends inside the first peripheral wall 120 from the end portion of the first peripheral wall 120 back away from the first bottom wall 110, and an inner annular wall surface of the first peripheral wall 120 is spaced apart from an outer annular wall surface of the second peripheral wall 220.

Referring to FIGS. 1 to 3, for ease of description, the direction from the second bottom wall 210 to the first bottom wall 110 is defined as a first direction X in this embodiment and the following embodiments. When the first peripheral wall 120 and the second peripheral wall 220 are circular annular in shape, the first direction X is parallel to a central axis 600 of the second peripheral wall 220, and at this time, the central axis 600 of the first peripheral wall 120 may overlap with the central axis 600 of the second peripheral wall 220.

It is hereby noted that in this embodiment, along the first direction X, the height dimension of the first peripheral wall 120 and the height dimension of the second peripheral wall 220 may vary depending on the specific situation. The height dimension of the first peripheral wall 120 along the first direction X may be greater than, less than, or equal to the height dimension of the second peripheral wall 220 along the first direction X. Viewed along a direction perpendicular to the first direction X, the dimension of the overlap between the first peripheral wall 120 and the second peripheral wall 220 along the first direction X may also depend on specific needs. Moreover, the end portion of the second peripheral wall 220 back away from the second bottom wall 210 may adhere to the first bottom wall 110 or may be spaced apart from the first bottom wall 110. For ease of description, the following embodiments are exemplified with the end portion of the second peripheral wall 220 back away from the second bottom wall 210 being spaced apart from the first bottom wall 110.

The second peripheral wall 220 includes a first annular segment 2211 and a second annular segment 2212. The first annular segment 2211 and the second annular segment 2212 are distributed along the first direction X, and the second annular segment 2212 is located on a side of the first annular segment 2211 back away from the second bottom wall 210. Both the first annular segment 2211 and the second annular segment 2212 are spaced apart from the first peripheral wall 120. That is, viewed along the direction perpendicular to the first direction X, the first annular segment 2211 at least partially overlaps with the first peripheral wall 120 and the second annular segment 2212 overlaps with the first peripheral wall 120. Along the circumferential direction around the first annular segment 2211, none of the first annular segment 2211 makes contact with the first peripheral wall 120 at any position; and along the circumferential direction around the second annular segment 2212, none of the second annular segment 2212 makes contact with the first peripheral wall 120 at any position.

Along the first direction X, the height dimension of the first annular segment 2211 and the height dimension of the second annular segment 2212 depend on specific needs. The first annular segment 2211 and the second annular segment 2212 may have a common boundary, i.e. they are directly connected. The first annular segment 2211 and the second annular segment 2212 may also be located away from each other with no common boundary, and are indirectly connected via a portion of the second peripheral wall 220 located between the first annular segment 2211 and the second annular segment 2212 (i.e., the third annular segment 2213 in one embodiment below).

After the electrode assembly 500 is accommodated in the accommodation cavity 300 between the first housing 100 and the second housing 200, the manner in which the electrical energy of the battery 10 is exported depends on specific needs. Referring to FIGS. 1 to 3, in one embodiment, the electrode assembly 500 includes a first tab 510 and a second tab 520 of different polarity. The first tab 510 is electrically connected to the first housing 100, and the second tab 520 is electrically connected to the second housing 200, such that the first housing 100 and the second housing 200 are both electrically charged and of different polarity from each other. An external circuit may obtain electrical energy from the battery 10 by being electrically connected to the first housing 100 and the second housing 200, respectively.

The adhesive member 400 is annular in shape, of which the outer annular wall surface and the inner annular wall surface may be adhesive, the outer annular wall surface of the adhesive member 400 adheres to the inner annular wall surface of the first peripheral wall 120, and the inner annular wall surface of the adhesive member 400 adheres to the outer annular wall surface of the second peripheral wall 220. The adhesive member 400 is at least partially filled between the first peripheral wall 120 and the second peripheral wall 220, in other words, a binder may be completely filled between the first peripheral wall 120 and the second peripheral wall 220; or the adhesive member 400 may be partially filled between the first peripheral wall 120 and the second peripheral wall 220, and partially located outside the gap between the first peripheral wall 120 and the second peripheral wall 220 (which may be located on a side of the first peripheral wall 120 back away from the end portion of the first bottom wall 110, or located on a side of the second peripheral wall 220 back away from the end portion of the second bottom wall 210).

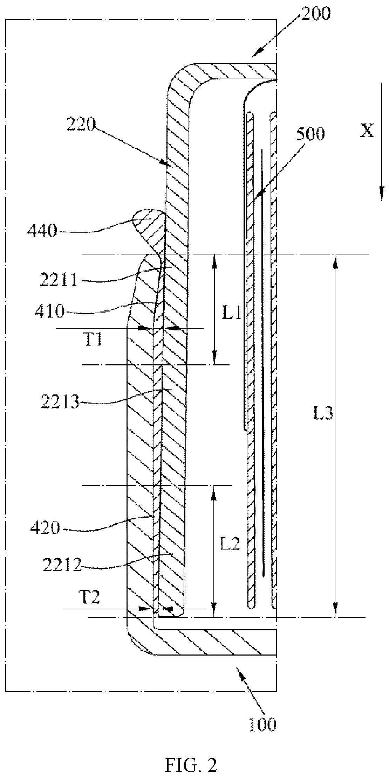

Referring to FIGS. 2 to 3, the adhesive member 400 includes a first portion 410 and a second portion 420 that are connected to each other. The first portion 410 is arranged around the outer periphery of the first annular segment 2211, and the first portion 410 at least partially fills a gap between the first annular segment 2211 and the first peripheral wall 120. The second portion 420 is arranged around the outer periphery of the second annular segment 2212, and the second portion 420 at least partially fills a gap between the second annular segment 2212 and the first peripheral wall 120. The first portion 410 and the second portion 420 may have a common boundary and are directly connected. The first portion 410 and the second portion 420 may have no common boundary, and are indirectly connected via other portions of the adhesive member 400.

The material of the adhesive member 400 may vary depending on specific situations. Exemplarily, the material of the adhesive member 400 is at least one of polytetrafluoroethylene and a modified substance thereof, propylene glycol methyl ether acetate and a modified substance thereof, a copolymer of a small amount of a Trifluoro(heptafluoro-1-propoxy)ethylene with polytetrafluoroethylene and a modified substance thereof, polypropylene and a modified substance thereof, polyethylene and a modified substance thereof, and a propylene-ethylene copolymer. When the material of the adhesive member 400 is at least one of the above materials, the adhesive member 400 can be made to have high elasticity and a better sealing effect.

In particular, in this embodiment, the first annular segment 2211 is spaced apart from the first peripheral wall 120 with a spacing of T1, the second annular segment 2212 is spaced apart from the first peripheral wall 120 with a spacing of T2, and 30% ≤ T2/T1 ≤ 95%. Exemplarily, T2/T1 may be 30%, 40%, 50%, 60%, 70%, 80%, 90%, or 95%, and the like. It is hereby noted that the spacing T1 is a spacing between any position of the first annular segment 2211 and the first peripheral wall 120, and the first annular segment 2211 may have an equal spacing between all positions of the first annular segment 2211 and the first peripheral wall 120, or the spacing between any position of the first annular segment 2211 and the first peripheral wall 120 along the first direction X may be unequal. The spacing T2 is a spacing between any position of the second annular segment 2212 and the first peripheral wall 120. The second annular segment 2212 may have an equal spacing between any position of the second annular segment 2212 and the first peripheral wall 120, or the spacing between any position of the second annular segment 2212 and the first peripheral wall 120 along the first direction X may be unequal. 30% < T2/T1 ≤ 95% is represented as the spacing between at least one of the positions of the second annular segment 2212 and the first peripheral wall 120 is 30% to 95% of the spacing between at least one of the positions of the first annular segment 2211 and the first peripheral wall 120. In one embodiment, the spacing between any one position of the second annular segment 2212 and the first peripheral wall 120 is 30% to 95% of the spacing between at least one position of the first annular segment 2211 and the first peripheral wall 120. In one embodiment, the spacing between any one position of the second annular segment 2212 and the first peripheral wall 120 is 30% to 95% of the spacing between any one position of the first annular segment 2211 and the first peripheral wall 120.

In this embodiment, through the coordination of the spacing T1 and the spacing T2, after the adhesive member 400 is provided between the first peripheral wall 120 and the second peripheral wall 220, the adhesive member 400 forms different compression ratios between the first annular segment 2211 and the first peripheral wall 120 and between the second annular segment 2212 and the first peripheral wall 120, and the compression ratio correspond to the dimensional requirement of 30% <_ T2/T1 ≤ 95%, so that the sealing effect between the first peripheral wall 120 and the second peripheral wall 220 is better, the problem that the adhesive member 400 loses the sealing effect due to the aging of the adhesive member 400 or the vibration of the battery 10, and thus the service life of the battery 10 is prolonged.

The second peripheral wall 220 includes a spacing segment 221 spaced apart from the first peripheral wall 120, in other words, viewed along a direction perpendicular to the first direction X, the portion where the second peripheral wall 220 overlaps the second peripheral wall 220 is the spacing segment 221. Along the first direction X, the height dimension of the spacing segment 221 depends on specific needs. Referring to FIGS. 1 to 3, in one embodiment, along the first direction X, the spacing L4 from the first bottom wall 110 to the second bottom wall 210 and the height dimension L3 of the spacing segment 221 satisfy: 50% <_ L3/L4 ≤ 80%. Exemplarily, L3/L4 may be 50%, 60%, 70%, or 80%, etc. When 50% <_ L3/L4 ≤ 80%, it is possible to make the connection between the first peripheral wall 120 and the second peripheral wall 220 more stable, and it is also possible to improve the arrangement space of the electrode assembly 500, and improve the energy density of the battery 10.

The spacing segment 221 includes a first annular segment 2211 and a second annular segment 2212. The arrangement position of the closest spacing between the spacing segment 221 and the first peripheral wall 120 and the arrangement position of the farthest spacing between the spacing segment 221 and the first peripheral wall 120 depend on specific needs. In one embodiment, the arrangement position of the closest spacing between the spacing segment 221 and the first peripheral wall 120 may be located in the second annular segment 2212. In another embodiment, the arrangement position of the closest spacing between the spacing segment 221 and the first peripheral wall 120 may be located in a part outside the second annular segment 2212 of the spacing segment 221. Similarly, in one embodiment, the arrangement position of the farthest spacing between the spacing segment 221 and the first peripheral wall 120 may be located at the first annular segment 2211. In another embodiment, the arrangement position of the farthest spacing between the spacing segment 221 and the first peripheral wall 120 may be located at a part outside the first annular segment 2211 of the spacing segment 221.

For ease of description, the following is an example of a structure in which the portion of the spacing segment 221 that is closest to the first peripheral wall 120 is located in the second annular segment 2212, and the portion of the spacing segment 221 that is farthest from the first peripheral wall 120 is located in the first annular segment 2211. When the portion of the spacing segment 221 that is closest to the first peripheral wall 120 is located in the second annular segment 2212, and the portion of the first peripheral wall 120 that is farthest from the first peripheral wall 120 is located in the first annular segment 2211, the compression ratio of each portion of the adhesive member 400 located between the spacing segment 221 and the first peripheral wall 120 can better satisfy the demand, so that the sealing effect between the first peripheral wall 120 and the second peripheral wall 220 is better, and the problem that the adhesive member 400 loses the sealing effect due to the aging of the adhesive member 400 or the vibration of the battery 10 can be relieved.

The arrangement position of the first annular segment 2211 in the spacing segment 221 and the arrangement position of the second annular segment 2212 in the spacing segment 221 may depend on specific needs. In one embodiment, the first annular segment 2211 is located at an end portion of the spacing segment 221 close to the second bottom wall 210, and the second annular segment 2212 is located at an end portion of the spacing segment 221 back away from the second bottom wall 210. In this solution, it is possible to make the first annular segment 2211 and the second annular segment 2212 more distantly spaced along the first direction X, so that the change in the thickness dimension of the adhesive member 400 along the first direction X is smoother, and it is possible to enhance the adhesive degree of the adhesive member 400 to the first peripheral wall 120 and the second peripheral wall 220, further enhancing the sealing effect of the adhesive member 400.

Along the first direction X, the ratio between the height dimension L1 of the first annular segment 2211 and the height dimension L3 of the spacing segment 221 may depend on specific needs. Referring to FIG. 2, in one embodiment, along the first direction X, the height dimension L1 of the first annular segment 2211 and the height dimension L3 of the spacing segment 221 satisfy 10% <_ L1/L3 ≤ 50%. Exemplarily, L1/L3 may be 10%, 20%, 30%, 40%, or 50%, etc. In one embodiment, along the first direction X, the height dimension L1 of the first annular segment 2211 and the height dimension L3 of the spacing segment 221 satisfy 30% <_ L1/L3 ≤ 50%. This solution facilitates the adhesive member 400 to adhere well to the first peripheral wall 120 and the first annular segment 2211.

Similarly, along the first direction X, the ratio between the height dimension L2 of the second annular segment 2212 and the height dimension L3 of the spacing segment 221 may depend on specific needs. Referring to FIG. 2, in one embodiment, along the first direction X, the height dimension L2 of the second annular segment 2212 and the height dimension L3 of the spacing segment 221 satisfy 10% <_ L2/L3 ≤ 50%. Exemplarily, L2/L3 may be 10%, 20%, 30%, 40%, or 50%, etc. This solution facilitates the adhesive member 400 to adhere well to the first peripheral wall 120 and the second annular segment 2212.

In some embodiments, the spacing segment 221 further includes a third annular segment 2213, one end of the third annular segment 2213 is connected to the first annular segment 2211, and the other end of the third annular segment 2213 is connected to the second annular segment 2212. That is, in this embodiment, the first annular segment 2211 and the second annular segment 2212 have no common boundary and are indirectly connected via the third annular segment 2213. The third annular segment 2213 has a common boundary with each of the first annular segment 2211 and the second annular segment 2212. In particular, in this embodiment, along the first direction X, the spacing of the third annular segment 2213 from the first peripheral wall 120 gradually decreases, specifically the spacing may decrease linearly or at other rates of change. In this embodiment, along the first direction X, the spacing of the third annular segment 2213 from the first peripheral wall 120 decreases linearly. In this solution, the thickness dimension of the adhesive member 400 at the position of the third annular segment 2213 gradually decreases along the first direction X. The dimensional change of the adhesive member 400 is smoother and does not produce a sudden change, which can enhance the adhesive degree of the adhesive member 400 with the first peripheral wall 120 and the second peripheral wall 220, and further enhance the sealing effect of the adhesive member 400.

In some embodiments, the compression ratio of the second portion 420 of the adhesive member 400 along the direction perpendicular to the first direction X may range from 40% to 120%. Exemplarily, the compression ratio may be 40%, 50%, 60%, 70%, 80%, 90%, 100%, 110%, or 120%, etc. In this application, "compression ratio of the second portion 420" refers to the ratio of the thickness of the second portion 420 when the second portion 420 is located between the first peripheral wall 120 and the second peripheral wall 220 to the thickness of the second portion 420 when the second portion 420 stands and is restored to a free state after being disassembled from the battery 10.

When the compression ratio of the adhesive member 400 is between 40% and 100%, exemplarily, the compression ratio may be 40%, 50%, 60%, 70%, 80%, 90%, or 100%, etc., the second portion 420, after the second portion 420 is located between the first peripheral wall 120 and the second peripheral wall 220 (which may be specifically between the second annular segment 2212 and the first peripheral wall 120), the second portion 420 is in a compressed state, the internal stress at the engaging place between the first peripheral wall 120 and the second peripheral wall 220 is larger, requiring the housing to be made of a material with high mechanical strength or the housing to have a thickness that can support the stress therein without cracking, while the material elasticity of the adhesive member 400 used can support the larger internal stress without breaking.

When the compression ratio of the second portion 420 is between 100% and 120%, exemplarily, the compression ratio may be 100%, 105%, 110%, 115%, or 120%, etc., the engagement stress between the first peripheral wall 120 and the second peripheral wall 220 is lower, and they are bonded primarily by the cooperation of thermocompression between the adhesive member 400 and the first peripheral wall 120 and between the adhesive member 400 and the second peripheral wall 220, but since the thermocompression bonding process itself causes expansion and increase in thickness of the adhesive member 400, an appropriate proportion of rebound of 100% to 120% relative to the original thickness of the adhesive member 400 can also achieve efficient sealing, and this sealing situation has the advantage of having lower requirements for housing strength and strength and material of the adhesive member 400, and a higher rate of production excellence.

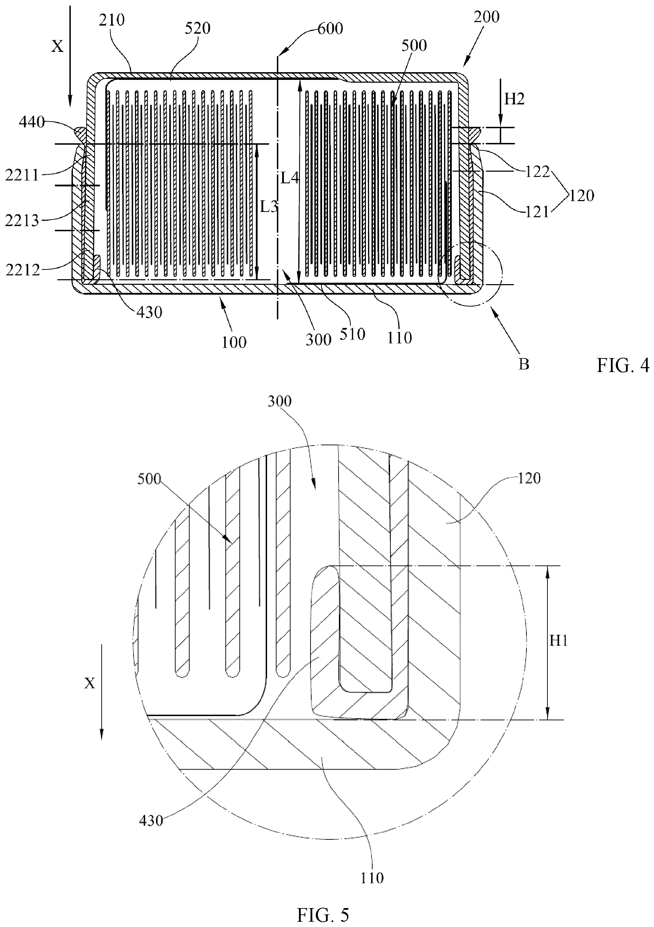

Referring to FIGS. 4 to 5, this applicant takes into account that the end portion of the second peripheral wall 220 back away from the second bottom wall 210 is spaced apart from the first peripheral wall 120, and in this embodiment, in order to further enhance the sealing effect of the adhesive member 400, the adhesive member 400 further includes a third portion 430 connected to the second portion 420, and along the first direction X, the third portion 430 extends beyond an end portion of the spacing segment 221 back away from the second bottom wall 210. In this way, the gap between the part of the second peripheral wall 220 back away from the end portion of the second bottom wall 210 and the first peripheral wall 120 is made to be well covered with the adhesive member 400, which improves the sealing effect of the battery 10 and reduces the generation of leakage.

When the end portion of the second annular segment 2212 back away from the second bottom wall 210 is spaced apart from the first bottom wall 110, and the adhesive member 400 extends out of the end portion of the second annular segment 2212 back away from the second bottom wall 210, the third portion 430 may extend to adhere to the first bottom wall 110, or the third portion 430 may extend to be spaced apart from the first bottom wall 110. To enhance the sealing effect, in one embodiment, the third portion 430 extends to adhere to the first bottom wall 110, and further, the third portion 430 may be bonded to the first bottom wall 110.

Referring to FIGS. 4 to 5, in one embodiment, the third portion 430 of the adhesive member 400 is folded to adhere to the inner annular wall surface of the second peripheral wall 220. In this solution, on the one hand, the adhesive member 400 can be connected more tightly with the second peripheral wall 220, and can effectively reduce the risk of the adhesive member 400 falling off the second peripheral wall 220. On the other hand, the adhesive member 400 can first be bonded to the outer annular wall surface of the second peripheral wall 220, and then the portion extending out of the second peripheral wall 220 is bent to adhere to the inner annular wall surface of the second peripheral wall 220, and then the second peripheral wall 220 is made to extend into the first peripheral wall 120. The structure in which the third portion 430 of the adhesive member 400 is folded to adhere to the inner annular wall surface of the second peripheral wall 220 makes it possible that when the second peripheral wall 220 extends into the first peripheral wall 120, the adhesive member 400 is less likely to be misaligned with the second peripheral wall 220, and the positioning accuracy of the adhesive member 400 is higher.

Referring to FIG. 5, when the third portion 430 of the adhesive member 400 is bent to adhere to the inner annular wall surface of the second peripheral wall 220, in some embodiments, along the first direction X, the height dimension H1 of the third portion 430 and the spacing L4 from the first bottom wall 110 to the second bottom wall 210 satisfy 5% < H1/L4 ≤ 30%. Exemplarily, H1/L4 may be 5%, 10%, 15%, 20%, 25%, or 30%, etc. When 5% <_ H1/L4 ≤ 30%, the bonding effect of the adhesive member 400 is better while the space occupied by the adhesive member 400 is reduced.

An end portion of the adhesive member 400 back away from the first bottom wall 110 may extend out of the gap between the first peripheral wall 120 and the second peripheral wall 220, or may be located within the gap between the first peripheral wall 120 and the second peripheral wall 220. To enhance the sealing effect of the adhesive member 400, referring to FIGS. 4 to 5, in one embodiment, the adhesive member 400 may further include a fourth portion 440 connected to the first portion 410, and the fourth portion 440 is connected to an end portion of the first portion 410 back away from the second portion 420. The fourth portion 440 extends beyond, along a direction opposite to the first direction X, the end portion of the first peripheral wall 120 back away from the first bottom wall 110. The fourth portion 440 can well cover the space between the end portion of the first peripheral wall 120 back away from the first bottom wall 110 and the second peripheral wall 220, thereby effectively reducing the risk of leakage of the battery 10.

In some embodiments, along the first direction X, the height dimension H2 of the fourth portion 440 is not less than 0.1 mm. Exemplarily, along the first direction X, the height H2 of the fourth portion 440 may be 0.11 mm, 0.13 mm, 0.15 mm, 0.17 mm, 0.19 mm, or 0.21 mm. In this solution, it is possible to make the fourth portion 440 have a more desirable sealing effect.

Referring to FIGS. 1 to 3, in one embodiment, the first peripheral wall 120 includes a fourth annular segment 121 and a fifth annular segment 122 sequentially connected along the first direction X. One end of the fourth annular segment 121 is connected to the first bottom wall 110, and the other end of the fourth annular segment 121 is connected to the fifth annular segment 122. The fifth annular segment 122 may be located at an end portion of the first peripheral wall 120 back away from the second peripheral wall 220, and also may be located close to a central position of the first peripheral wall 120. For ease of description, the following is an example of the fifth annular segment 122 being located at an end position of the first peripheral wall 120 back away from the first bottom wall 110. Along a direction opposite to the first direction X, the spacing of the fifth annular segment 122 from the second peripheral wall 220 gradually decreases. In this solution, the port area of the end portion of the first peripheral wall 120 back away from the first bottom wall 110 is made smaller, reducing the gap between the first peripheral wall 120 and the second peripheral wall 220, and at the same time compressing the adhesive member 400, and further enhancing the sealing effect of the adhesive member 400.

A second aspect of this application also provides an electronic apparatus, including the battery 10 provided by this application. There is no special restriction on the electronic apparatus of this application, which may any electronic apparatus known in the art. For example, the electronic apparatus may include, but is not limited to, a notebook computer, pen-inputting computer, mobile computer, e-book player, portable phone, portable fax machine, portable photocopier, portable printer, head-mounted stereo headset, video recorder, liquid crystal display television set, handheld cleaner, portable CD player, mini CD-ROM, transceiver, electronic notepad, calculator, memory card, portable voice recorder, radio, backup power supply, electric motor, automobile, motorcycle, power-assisted bicycle, bicycle, lighting appliance, toy, game console, watch, electric tool, flashlight, camera, large household storage battery 10, lithium-ion capacitor, and the like.

It is hereby noted that preferred embodiments of this application are given in the description of this application and the accompanying drawings thereof. However, this application may be implemented in many different forms and is not limited to the embodiments described in the description. These embodiments are not taken as an additional limitation on contents of this application, but are provided for the purpose of ensuring a more thorough and comprehensive understanding of the disclosure of this application. Moreover, the foregoing technical features continue to be combined to form various embodiments not listed above, which are all regarded as within the scope recited in the description of this application. Further, a person of ordinary skill in the art may make improvements or variations according to the foregoing illustrations, and all such improvements and variations shall fall within the scope of protection of the appended claims of this application.

## Claims

1. A battery, **characterized in that** the battery comprises:
an electrode assembly;
a first housing comprising a first bottom wall and a first peripheral wall, the first bottom wall being connected to and covering one end of the first peripheral wall; and
a second housing comprising a second bottom wall and a second peripheral wall, the second bottom wall being connected to and covering one end of the second peripheral wall, and the first peripheral wall being arranged outside the second peripheral wall in a sleeving manner so that the first housing and the second housing together define an accommodation cavity for accommodating the electrode assembly;
wherein the second peripheral wall comprises a first annular segment and a second annular segment, the second annular segment is located on a side of the first annular segment back away from the second bottom wall, the first annular segment is spaced apart from the first peripheral wall with a spacing of T1, the second annular segment is spaced apart from the first peripheral wall with a spacing of T2, and 30% <_ T2/T1 ≤ 95%.

2. The battery according to claim 1, **characterized in that**
the second peripheral wall comprises a spacing segment spaced from the first peripheral wall, the spacing segment comprises the first annular segment and the second annular segment, a portion of the spacing segment closest to the first peripheral wall is located in the second annular segment, and a portion of the spacing segment farthest from the first peripheral wall is located in the first annular segment.

3. The battery according to claim 2, **characterized in that**
the spacing segment further comprises a third annular segment, one end of the third annular segment is connected to the first annular segment, and the other end of the third annular segment is connected to the second annular segment; and
a spacing of the third annular segment from the first peripheral wall gradually decreases along a direction from the second bottom wall to the first bottom wall.

4. The battery according to claim 2, **characterized in that**
the first annular segment is located at an end portion of the spacing segment close to the second bottom wall, and the second annular segment is located at an end portion of the spacing segment back away from the second bottom wall.

5. The battery according to claim 2, **characterized in that**
along a direction from the second bottom wall to the first bottom wall, a height dimension L1 of the first annular segment, a height dimension L2 of the second annular segment, and a height dimension L3 of the spacing segment satisfy:
10% <_ L1/L3 ≤ 50%, and/or 10% < L2/L3 ≤ 50%.

6. The battery according to claim 2, **characterized in that**
along a direction from the second bottom wall to the first bottom wall, a spacing L4 from the first bottom wall to the second bottom wall and the height dimension L3 of the spacing segment satisfy: 50% <_ L3/L4 ≤ 80%.

7. The battery according to claim 1, **characterized in that**
the battery further comprises an adhesive member, the adhesive member is at least partially filled between the first peripheral wall and the second peripheral wall, and the adhesive member is disposed around an outer periphery of the second peripheral wall; and
the adhesive member comprises a first portion and a second portion that are connected to each other, the first portion at least partially fills a gap between the first annular segment and the first peripheral wall, and the second portion at least partially fills a gap between the second annular segment and the first peripheral wall.

8. The battery according to claim 7, **characterized in that**
a compression ratio of the second portion ranges from 40% to 120%.

9. The battery according to claim 7, **characterized in that**
the adhesive member further comprises a third portion, the third portion is connected to an end of the second portion back away from the first portion, and along a direction from the second bottom wall to the first bottom wall, the third portion extends beyond an end portion of the second peripheral wall back away from the second bottom wall.

10. The battery according to claim 9, **characterized in that**
the third portion is folded to adhere to an inner annular wall surface of the second peripheral wall.

11. The battery according to claim 10, **characterized in that**
along a direction from the second bottom wall to the first bottom wall, a height dimension H1 of the third portion and a spacing L4 from the first bottom wall to the second bottom wall satisfy 5% <_ H1/L4 ≤ 30%.

12. The battery according to claim 9, **characterized in that**
the adhesive member further comprises a fourth portion, the fourth portion is connected to an end portion of the first portion back away from the second portion, and along a direction from the first bottom wall to the second bottom wall, the fourth portion extends beyond an end portion of the first peripheral wall back away from the first bottom wall.

13. The battery according to claim 12, **characterized in that**
along a direction from the second bottom wall to the first bottom wall, the fourth portion has a dimension of not less than 0.1 mm.

14. The battery according to claim 1, **characterized in that**
the first peripheral wall comprises a fourth annular segment and a fifth annular segment, one end of the fourth annular segment is connected to the first bottom wall, and the other end of the fourth annular segment is connected to the fifth annular segment; and
along a direction from the first bottom wall to the second bottom wall, a spacing of the fifth annular segment from the second peripheral wall gradually decreases.

15. The battery according to claim 7, **characterized in that**
a material of the adhesive member is at least one of polytetrafluoroethylene and a modified substance thereof, propylene glycol methyl ether acetate and a modified substance thereof, a copolymer of a small amount of a Trifluoro(heptafluoro-1-propoxy)ethylene with polytetrafluoroethylene and a modified substance thereof, polypropylene and a modified substance thereof, polyethylene and a modified substance thereof, and a propylene-ethylene copolymer.

16. An electronic apparatus, **characterized in that** the electronic apparatus comprises the battery according to any one of claims 1 to 15.
